# EUROPÄISCHE PATENTANMELDUNG

(11) **EP 1 304 611 A2**
(43) Veröffentlichungstag der Anmeldung: **23.04.2003**
(21) Anmeldenummer: 02022720.3
(22) Anmeldetag: 11.10.2002
(51) Int. Cl.: G06F 3/033, B60K 37/06

(54) **Rechnergesteuerte Informations- und Bedienungseinrichtung**

(30) Priorität: 18.10.2001 DE 10151424
(71) Anmelder: ADAM OPEL AG, 65423 Rüsselsheim (DE)
(72) Erfinder: Friesen, Markus, Dipl.-Ing., 64521 Gross-Gerau (DE)

(57) **Zusammenfassung**

Eine rechnergesteuerte Informations- und Bedieneinrichtung, insbesondere für ein Kraftfahrzeug, umfasst eine Anzeigeeinrichtung (5) zur Darstellung mindestens eines Menüfensters (4) zur Wiedergabe von Menüauswahlobjekten (2) eines baumartig strukturierten Menüs (1), das mehrere Seiten (6) Menüauswahlobjekte (2) umfasst, sowie eine Eingabeeinrichtung (7) zur Auswahl und Beaufschlagung der Menüauswahlobjekte (2). Jeweils das erste und das letzte Menüauswahlobjekt (2) einer Seite (6) stellen eine obere oder untere und/oder seitliche Grenze für die Eingabeeinrichtung (7) dar und bei einem Überschreiten einer der Grenzen erfolgt die Einblendung mindestens eines Schalters (12) für eine Sprungfunktion innerhalb des Menüs (1).

## Beschreibung

Die Erfindung bezieht sich auf eine rechnergesteuerte Informations- und Bedieneinrichtung, insbesondere für ein Kraftfahrzeug, mit einer Anzeigeeinrichtung zur Darstellung mindestens eines Menüfensters zur Wiedergabe von Menüauswahlobjekten eines baumartig strukturierten Menüs, das mehrere Seiten Menüauswahlobjekte umfasst, sowie einer Eingabeeinrichtung zur Auswahl und Beaufschlagung der Menüauswahlobjekte.

Aus der DE 198 07 410 A1 ist eine Multifunktions-Bedieneinrichtung zur Auswahl und Steuerung einer Vielzahl von Funktionen, insbesondere für ein Kraftfahrzeug, bekannt, die eine Anzeigeeinrichtung, Funktionstasten mit einer fest zugeordneten Funktion, deren Ablaufsteuerung mittels auf der Anzeigeeinrichtung darstellbarer Softkeys beeinflussbar ist, und mindestens ein Bedienfeld mit fest zugeordneter Funktionalität umfasst. Die Funktionstasten sind teilweise frei programmierbar ausgebildet. Im Weiteren ist der Multifunktions-Bedieneinrichtung mindestens ein zweidimensionaler Menü-Auswahlschalter zugeordnet.

Darüber hinaus offenbart die DE 196 00 555 A1 eine über ein sequentiell zu durchlaufendes Menü steuerbare Vorrichtung mit einer Anzeigeeinrichtung für Menüauswahlobjekte, einer Einrichtung zur Auswahl eines angezeigten Menüauswahlobjektes und einer Einrichtung zum Bewirken eines Übergangs zu einem nachfolgenden Menüauswahlobjekt. Im Weiteren ist ein baumartig strukturiertes Menü aus hierarchisch gegliederten Menülisten mit Menüauswahlobjekten vorgesehen, wobei die Menüauswahlobjekte ihrerseits wieder Menülisten sein können. Wenigstens eine Menüliste umfasst ein Menüauswahlobjekt, dessen Auswahl einen direkten Sprung zum nachfolgenden Menüauswahlobjekt der nächsthöheren Ebene bewirkt. Hierbei erweist es sich als nachteilig, dass das Menüauswahlobjekt, dessen Auswahl einen direkten Sprung zum nachfolgenden Menüauswahlobjekt der nächsthöheren Ebene bewirkt, permanent einen bestimmten Platz auf der Anzeigeeinrichtung beansprucht, weshalb bei einer Darstellung einer vorbestimmten Anzahl von Menüauswahlobjekten auf einer Seite, die Menüauswahlobjekte entweder relativ klein dargestellt werden müssen oder ein Rollen der Seite auf der Anzeigeeinrichtung erforderlich ist.

Ferner offenbart die DE 199 26 651 C1 einen Geber für ein Kraftfahrzeug, der durch Drehen oder durch axialen Druck zu betätigen ist, und der zur Bedienung zumindest eines im Kraftfahrzeug angeordneten Mikrocomputers dient, wobei durch die Drehbewegung eine Funktions-/Menüauswahl erfolgt und durch axialen Druck oder Zug die eingestellte Funktion ausgeführt wird.

Des Weiteren ist aus der DE 199 26 651 C1 ein Geber für ein Kraftfahrzeug bekannt, der durch Drehen und durch axialen Druck/Zug zu betätigen ist, und mit dem Menüsteuerungen vorgenommen werden können, wobei der Geber in einer inaktiven Phase des Menüs zur direkten Ansteuerung einer Kfz-Funktion dient.

Es ist Aufgabe der Erfindung, eine rechnergesteuerte Informations- und Bedieneinrichtung der eingangs genannten Art zu schaffen, die aufgrund einer übersichtlichen Darstellung der Menüauswahlobjekte relativ einfach zu bedienen ist.

Erfindungsgemäß wird die Aufgabe dadurch gelöst, dass jeweils das erste und das letzte Menüauswahlobjekt einer Seite eine obere oder untere und/oder seitliche Grenze für die Eingabeeinrichtung darstellen und bei einem Überschreiten einer der Grenzen die Einblendung mindestens eines Schalters für eine Sprungfunktion innerhalb des Menüs erfolgt.

Da ein Schalter für eine Sprungfunktion erst beim Überschreiten einer der Grenzen innerhalb des Menüfensters der Anzeigeeinrichtung eingeblendet wird, steht der Platz innerhalb des Menüfensters vollständig zur Darstellung der Menüauswahlobjekte einer Seite zur Verfügung, wobei die Menüauswahlobjekte als Menülisten ausgebildet sein können, die jeweils zu einer Seite mit Menüauswahlobjekten einer weiteren Ebene, auch einer hierarchisch höheren Ebene, des baumartig strukturierten Menüs führen können. Der Schalter für die Sprungfunktion innerhalb des Menüs wird neben den auf der Seite dargestellten Menüauswahlobjekten eingeblendet, wobei er zumindest einzelne benachbarter Menüauswahlobjekte auch ganz oder teilweise überblendet. Durch das bedarfsweise Einblenden wird eine große Übersichtlichkeit in der Darstellung der Menüauswahlobjekte erzielt, da für diese bei einer vorgegebenen Größe des Menüfensters und einer vorgegebenen Anzahl der auf einer Seite darzustellenden Menüauswahlobjekte ein relativ großer Schriftgrad gewählt werden kann. Im Weiteren ist ein benachbarte Menüauswahlobjekte überblendender Schalter, mit dem eine Sprungfunktion innerhalb des Menüs erfolgt, optisch relativ leicht wahrnehmbar, weshalb die Bedienung der Informations- und Bedieneinrichtung relativ einfach zu bewerkstelligen ist.

Bevorzugt erfolgt die Einblendung des Schalters dann, wenn ein mit der Eingabeeinrichtung zu steuernder Cursor auf dem ersten oder dem letzten Menüauswahlobjekt der Seite steht und weiter in Richtung der oberen oder unteren Grenze bzw. einer der seitlichen Grenzen bewegt wird. Der Cursor kann neben einer üblichen Darstellung als Zeiger oder dergleichen auch derart ausgestaltet sein, dass das durch den Cursor ausgewählte Menüauswahlobjekt in der optischen Darstellung gegenüber den nicht ausgewählten Menüauswahlobjekten beispielsweise farblich verändert ist. Ist beispielsweise das erste Menüauswahlobjekt mittels der Eingabeeinrichtung ausgewählt und wird die Eingabeeinrichtung derart betätigt, dass sich der Cursor nach oben oder zu einer der Seiten bewegt, erfolgt keine Verschiebung des Cursors, da das Menüauswahlobjekt eine Grenze für denselben darstellt, vielmehr wird der Schalter für eine Sprungfunktion innerhalb der Anzeigeeinrichtung eingeblendet. Dasselbe erfolgt falls der Cursor auf dem letzten Menüauswahlobjekt steht und nach unten oder zu einer der Seiten bewegt werden soll.

Nach einer vorteilhaften Weiterbildung der Erfindung ist ein erster Schalter als Zurück-Schalter ausgebildet, dessen Beaufschlagung mittels der Eingabeeinrichtung einen Sprung in eine vorherige Menüebene und die Darstellung der Menüauswahlobjekte der vorhergehenden Seite bewirkt. Somit ist eine einfache und zuverlässige Möglichkeit gegeben, aus einer tiefen Menüebene in die vorherige Menüebene zu springen und die zugehörige Seite in dem Menüfenster darzustellen.

Gemäß einer weiteren vorteilhaften Ausgestaltung der Erfindung ist ein zweiter Schalter als Main-Schalter ausgebildet, dessen Beaufschlagung mittels der Eingabeeinrichtung einen Sprung zur Wurzel (Root) des Menüs und die Darstellung der Menüauswahlobjekte dieser Seite des Menüs bewirkt. Von der Wurzel des Menübaums, also dessen Anfang, erfolgt durch die Beaufschlagung eines entsprechenden Menüauswahlobjektes mittels der Eingabeeinrichtung eine Navigation in eine tiefere Menüebene, wobei die der Menüebene zugeordnete Seite mit den entsprechenden Menüauswahlobjekten zur Anzeige gebracht wird.

Zweckmäßigerweise erfolgt die Einblendung des Zurück-Schalters beim Bewegen des Cursors in Richtung einer dem ersten Menüauswahlobjekt einer Seite zugeordneten Grenze. Bevorzugt erfolgt die Einblendung des Main-Schalters beim Bewegen des Cursors in Richtung einer dem letzten Menüauswahlobjekt einer Seite zugeordneten Grenze.

Um die Navigation auf der momentan dargestellten Seite nach dem Einblenden eines der Schalter sicherzustellen, bewirkt vorteilhafterweise ein Bewegen des Cursors entgegen der Richtung einer dem ersten oder letzten Menüauswahlobjekt einer Seite zugeordneten Grenze die Ausblendung des Zurück-Schalters bzw. des Main-Schalters. Nach dem Ausblenden des Zurück-Schalters bzw. des Main-Schalters stehen die Menüauswahlobjekte der dargestellten Seite zur Auswahl und Beaufschlagung mittels der Eingabeeinrichtung zur Verfügung.

Da die Navigation mit der Eingabeeinrichtung relativ leicht zu bewerkstelligen sein soll, umfasst vorzugsweise die Eingabeeinrichtung ein Betätigungselement, das zur Auswahl eines der Menüauswahlobjekte einer Seite und zum Bewegen des Cursors in Richtung einer der Grenzen verdrehbar ist. Bevorzugt ist das Betätigungselement zur Beaufschlagung des ausgewählten Menüauswahlobjektes durch axialen Druck oder Zug zu betätigen. Durch das Drehen des Betätigungselementes springt der Cursor bei vertikal untereinander angeordneten Menüauswahlobjekten in Abhängigkeit von der Drehrichtung nach oben oder unten auf das nächste Menüauswahlobjekt, dessen Beaufschlagung, die beispielsweise einen Sprung auf eine Seite mit Menüauswahlobjekten einer nächst tieferen Menüebene bewirkt, durch axialen Druck oder Zug des Betätigungselementes erfolgt.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand eines Ausführungsbeispieles unter Bezugnahme auf die zugehörigen Zeichnungen näher erläutert. Es zeigen:
- Fig. 1: eine schematische Darstellung eines baumartig strukturierten Menüs für eine erfindungsgemäße rechnergesteuerte Informations- und Bedieneinrichtung,
- Fig. 2: eine schematische Darstellung einer Informations- und Bedieneinrichtung,
- Fig. 3: eine Darstellung einer Einzelheit III gemäß Fig. 2,
- Fig. 4: eine alternative Darstellung der Einzelheit III gemäß Fig. 2 und
- Fig. 5: eine weitere alternative Darstellung der Einzelheit III gemäß Fig. 2.

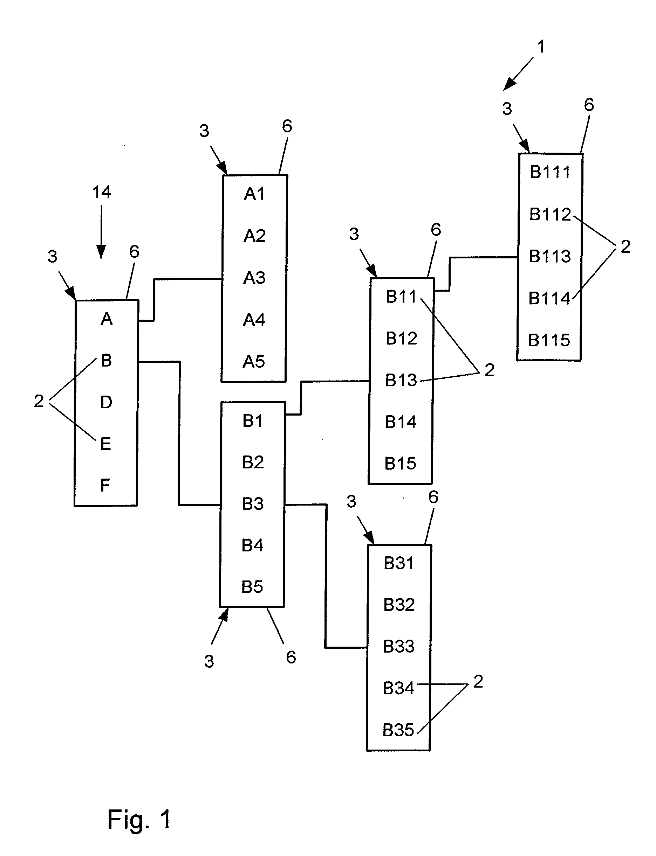

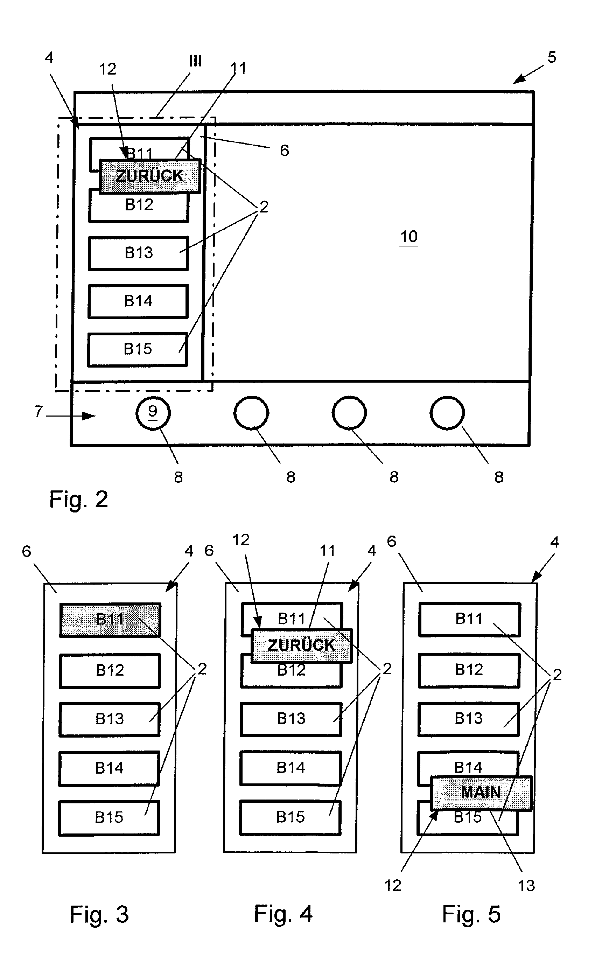

Gemäß den Fig. 1 und 2 umfasst ein baumartig strukturiertes Menü 1 mehrere Menüauswahlobjekte 2,die zu Menülisten 3 zusammengefasst sind, wobei eine Menüliste 3 zu einer in einem Menüfenster 4 einer Anzeigeeinrichtung 5 darstellbaren Seite 6 zusammengefasst ist. Zur Auswahl und Beaufschlagung der Menüauswahlobjekte 2 ist eine Eingabeeinrichtung 7 mit mehreren Betätigungselementen 8 vorgesehen. Eines der Betätigungselemente 8 ist als drehbarer Druckschalter 9 ausgebildet.

Nach Fig. 3 ist das Menüauswahlobjekt 2 "B11" ausgewählt. Dieses Menüauswahlobjekt 2 "B11" ist das erste Menüauswahlobjekt 2 der aktiven Menüliste 3 und stellt eine obere Grenze für die Eingabeeinrichtung 7 dar. Beaufschlagt ein Anwender den Druckschalter 9 gelangt er in eine hierarchisch tieferstehende Menüliste 3, die die Menüauswahlobjekte "B111" bis "B115" umfasst und die in dem Menüfenster 4 der Anzeigeeinrichtung 5 als eine Seite 6 dargestellt wird. Verdreht der Anwender den Druckschalter 9 nach links ist das Menüauswahlobjekt 2 "B12" ausgewählt und eine zugeordnete Funktion wird nach einer axialen Betätigung des Druckschalters 9 ausgeführt, wobei in einem Fenster 10 der Anzeigeeinrichtung Informationen zu Einstellungen eines Radios dargestellt werden und die Einstellungen mittels eines der Betätigungselemente 8 der Eingabeeinrichtung 7 zu verändern sind.

Ist das Menüauswahlobjekt 2 "B11" ausgewählt und der Anwender verdreht den Druckschalter 9 nach rechts, also in Richtung des oberen Anschlags, wird ein als Zurück-Schalter 11 ausgebildeter Schalter 12 eingeblendet, dem eine Sprungfunktion innerhalb des Menüs 1 zugeordnet ist. Der Zurück-Schalter 11 ist bei seiner Einblendung ausgewählt und wird mit dem Druckschalter 9 beaufschlagt, wonach die vorhergehende Seite 6 des Menüs 1 dargestellt wird. Diese Seite 6 umfasst die Menüauswahlobjekte 2 "B1" bis "B5". Ist der ausgewählte Zurück-Schalter 11 eingeblendet und der Anwender führt mit dem Druckschalter 9 eine nach links gerichtete Drehbewegung aus, wird der Zurück-Schalter 11 ausgeblendet und das Menüauswahlobjekt 2 "B11" ist ausgewählt.

Nach weiterer linksgerichteter Drehung des Druckschalters 9 ist das letzte Menüauswahlobjekt 2 "B15" der Seite 6, das eine untere Grenze darstellt, ausgewählt und kann beaufschlagt werden. Falls bei ausgewähltem Menüauswahlobjekt 2 "B15" eine weitere Linksdrehung erfolgt, wird ebenfalls ein Schalter 12 mit einer zugeordneten Sprungfunktion eingeblendet, der als Main-Schalter 13 ausgebildet ist und dessen Beaufschlagung mit dem Druckschalter 9 einen Sprung zur Wurzel 14 (Root) des Menüs 1 bewirkt. Nach der Beaufschlagung des Main-Schalters 13 werden die Menüauswahlobjekte 2 "A" bis "F" angezeigt.

### Bezugszeichenliste

- 1.: Menü
- 2.: Menüauswahlobjekt
- 3.: Menüliste
- 4.: Menüfenster
- 5.: Anzeigeeinrichtung
- 6.: Seite
- 7.: Eingabeeinrichtung
- 8.: Betätigungselement
- 9.: Druckschalter
- 10.: Fenster
- 11.: Zurück-Schalter
- 12.: Schalter
- 13.: Main-Schalter
- 14.: Wurzel

## Patentansprüche

1. Rechnergesteuerte Informations- und Bedieneinrichtung, insbesondere für ein Kraftfahrzeug, mit einer Anzeigeeinrichtung (5) zur Darstellung mindestens eines Menüfensters (4) zur Wiedergabe von Menüauswahlobjekten (2) eines baumartig strukturierten Menüs (1), das mehrere Seiten (6) Menüauswahlobjekte (2) umfasst, sowie einer Eingabeeinrichtung (7) zur Auswahl und Beaufschlagung der Menüauswahlobjekte (2), **dadurch gekennzeichnet, dass** jeweils das erste und das letzte Menüauswahlobjekt (2) einer Seite (6) eine obere oder untere und/oder seitliche Grenze für die Eingabeeinrichtung (7) darstellen und bei einem Überschreiten einer der Grenzen die Einblendung mindestens eines Schalters (12) für eine Sprungfunktion innerhalb des Menüs (1) erfolgt.

2. Rechnergesteuerte Informations- und Bedieneinrichtung nach Anspruch 1, **dadurch gekennzeichnet, dass** die Einblendung des Schalters (12) dann erfolgt, wenn ein mit der Eingabeeinrichtung (7) zu steuernder Cursor auf dem ersten oder dem letzten Menüauswahlobjekt (2) der Seite (6) steht und weiter in Richtung der oberen oder unteren Grenze bzw. einer der seitlichen Grenzen bewegt wird.

3. Rechnergesteuerte Informations- und Bedieneinrichtung nach Anspruch 1 oder 2, **dadurch gekennzeichnet, dass** ein erster Schalter (12) als Zurück-Schalter (11) ausgebildet ist, dessen Beaufschlagung mittels der Eingabeeinrichtung (7) einen Sprung in eine vorherige Menüebene und die Darstellung der Menüauswahlobjekte (2) der vorhergehenden Seite (6) bewirkt.

4. Rechnergesteuerte Informations- und Bedieneinrichtung nach Anspruch 1 oder 2, **dadurch gekennzeichnet, dass** ein zweiter Schalter (12) als Main-Schalter (13) ausgebildet ist, dessen Beaufschlagung mittels der Eingabeeinrichtung (7) einen Sprung zur Wurzel (14) (Root) des Menüs (1) und die Darstellung der Menüauswahlobjekte (2) dieser Seite (6) des Menüs (1) bewirkt.

5. Rechnergesteuerte Informations- und Bedieneinrichtung nach einem der Ansprüche 1 bis 3, **dadurch gekennzeichnet, dass** die Einblendung des Zurück-Schalters (11) beim Bewegen des Cursors in Richtung einer dem ersten Menüauswahlobjekt (2) einer Seite (6) zugeordneten Grenze erfolgt.

6. Rechnergesteuerte Informations- und Bedieneinrichtung nach Anspruch 1, 2 oder 4, **dadurch gekennzeichnet, dass** die Einblendung des Main-Schalters (13) beim Bewegen des Cursors in Richtung einer dem letzten Menüauswahlobjekt (2) einer Seite (6) zugeordneten Grenze erfolgt.

7. Rechnergesteuerte Informations- und Bedieneinrichtung nach einem der Ansprüche 1 bis 6, **dadurch gekennzeichnet, dass** ein Bewegen des Cursors entgegen der Richtung einer dem ersten oder letzten Menüauswahlobjekt (2) einer Seite (6) zugeordneten Grenze die Ausblendung des Zurück-Schalters (11) bzw. des Main-Schalters (13) bewirkt.

8. Rechnergesteuerte Informations- und Bedieneinrichtung nach einem der Ansprüche 1 bis 7, **dadurch gekennzeichnet, dass** die Eingabeeinrichtung (7) ein Betätigungselement (8) umfasst, das zur Auswahl eines der Menüauswahlobjekte (2) einer Seite (6) und zum Bewegen des Cursors in Richtung einer der Grenzen verdrehbar ist.

9. Rechnergesteuerte Informations- und Bedieneinrichtung nach Anspruch 8, **dadurch gekennzeichnet, dass** das Betätigungselement (8) zur Beaufschlagung des ausgewählten Menüauswahlobjektes (2) durch axialen Druck oder Zug zu betätigen ist.
